# EUROPÄISCHE PATENTSCHRIFT

(11) **EP 1 812 756 B1**
(45) Veröffentlichungstag und Bekanntmachung des Hinweises auf die Patenterteilung: **28.12.2016**
(21) Anmeldenummer: 05810983.6
(22) Anmeldetag: 15.11.2005
(51) Int. Cl.: F23R 3/34, F02C 7/26, F23D 17/00, F23R 3/28, F23L 7/00

(54) **VERFAHREN ZUM ANFAHREN EINES BRENNERS**
BURNER STARTING METHOD
PROCEDE POUR METTRE EN MARCHE UN BRULEUR

(30) Priorität: 18.11.2004 DE 102004055763; 28.02.2005 EP 05004361
(43) Veröffentlichungstag der Anmeldung: 01.08.2007
(73) Patentinhaber: Siemens Aktiengesellschaft, 80333 München (DE)
(72) Erfinder: KÖSTLIN, Berthold, 47057 Duisburg (DE); HANNEMANN, Frank, 91054 Buckenhof (DE); HEILOS, Andreas, 45479 Mülheim an der Ruhr (DE); ZIMMERMANN, Gerhard, 91315 Höchstadt/Aisch (DE)
(86) Internationale Anmeldenummer: PCT/EP2005/055973
(87) Internationale Veröffentlichungsnummer: WO 2006/053866

(56) Entgegenhaltungen:
- EP-A- 1 277 920
- DE-A1- 19 549 140
- DE-A1- 19 549 141
- US-A- 4 701 124
- US-A- 5 451 160

## Beschreibung

Die vorliegende Erfindung betrifft ein Verfahren zum Anfahren eines Brenners, der zum Verbrennen eines Synthesegases ausgelegt ist und eine erste und eine zweite Brennstoffpassage aufweist. Außerdem betrifft die vorliegende Erfindung eine Brenneranordnung für eine Feuerungsanlage, insbesondere eine Gasturbinenbrennkammer.

Ein Brenner für eine Gasturbine mit einer ersten Brennstoffpassage und einer zweiten Brennstoffpassage, welche von der ersten Brennstoffpassage im Wesentlichen konzentrisch umgeben ist, ist beispielsweise in EP 1 277 920 beschrieben. Der darin beschriebene Brenner ist zum Betrieb mit einem Synthesegas ausgelegt, wobei das Synthesegas in einen ersten Teilstrom und einen zweiten Teilstrom aufgeteilt wird und die Teilströme dem Brenner durch die erste und die zweite Brennstoffpassage getrennt zugeführt werden. Für jeden Teilstrom kann eine Regelung zum geregelten Zuführen der Teilströme vorhanden sein. Insbesondere können die Teilströme hierbei in Abhängigkeit von der zu erbringende Leistung der Gasturbine eingestellt werden. Die Regelung kann insbesondere auf den Gasmassenstrom oder den jeweiligen spezifischen Heizwert des zugeführten Brennstoffes Einfluss nehmen. Das Beeinflussen des Heizwertes erfolgt durch Zugabe von Erdgas zum Erhöhen des Heizwertes oder Dampf und/oder Stickstoff zum Vermindern des Heizwertes.

Ein Verfahren zum Anfahren eines Brenners, wobei der Brenner zum Verbrennen eines Synthesegases ausgelegt ist und eine erste und eine zweite Brennstoffpassage aufweist, ist in DE 195 49 140 beschrieben.

Gegenüber dem genannten Stand der Technik ist es Aufgabe der vorliegenden Erfindung, das Verfahren zum Betrieb eines Brenners mit einer ersten und einer zweiten Brennstoffpassage mit Synthesegas im Hinblick auf das Anfahren des Brenners weiterzuentwickeln.

Es ist eine weitere Aufgabe der vorliegenden Erfindung, einen Brenner mit einer ersten Brennstoffpassage und einer zweiten Brennstoffpassage, wobei die erste Brennstoffpassage die zweite Brennstoffpassage im Wesentlichen konzentrisch umgibt, zur Verfügung zu stellen, die insbesondere im Hinblick auf das Anfahren mit Synthesegas Vorteile bietet.

Die erste Aufgabe wird durch ein Verfahren zum Anfahren eines Brenners nach Ansprüche 1 und 3 und die zweite Aufgabe durch eine Brenneranordnung nach Anspruch 14 gelöst. Die abhängigen Ansprüche enthalten vorteilhafte Ausgestaltungen des erfindungsgemäßen Verfahren bzw. der erfindungsgemäßen Brenneranordnung.

Im erfindungsgemäßen Verfahren zum Anfahren eines Brenners, wobei der Brenner zum Verbrennen eines Synthesegases ausgelegt ist und eine erste und eine zweite Brennstoffpassage aufweist, wobei die erste Brennstoffpassage die zweite Brennstoffpassage im Wesentlichen konzentrisch umgibt, wird dem Brenner Synthesegas zugeführt, welches mit Verbrennungsluft gemischt und verbrannt wird. Zum Anfahren des Brenners erfolgt zunächst in einer Startphase ein Beladen der zweiten Brennstoffpassage mit Synthesegas bis zu einer vorgegebenen Brennerleistung. Danach erfolgt in einer sich an die Startphase anschließenden Anfahrphase ein Beladen der ersten Brennstoffpassage mit Synthesegas.

Das erfindungsgemäße Verfahren geht dabei von der Erkenntnis aus, dass der Gesamtwirkungsgrad der Gasturbine umso geringer wird, je höher der brennstoffseitige Druckverlust in dem mit dem Brennstoff zur Verbrennung beaufschlagten Brenner ist. Eine bestimmende Größe für den Druckverlust ist der Strömungswiderstand des Brenners für das strömende Synthesegas.

Im Interesse eines möglichst hohen Wirkungsgrades ist man bestrebt, einen möglichst geringen Druckverlust in der Brennstoffpassage zu erzielen. Andererseits ist jedoch für das Aufrechterhalten einer stabilen Flamme eine Mindestaustrittgeschwindigkeit des Synthesegases notwendig. Diese Mindestaustrittsgeschwindigkeit erfordert aber einen bestimmten, nicht zu unterschreitenden Druckverlust über die Brennstoffpassage. Die Ausströmgeschwindigkeit ist mit dem Druckverlust gekoppelt. Je geringer der Druckverlust über die Brennstoffpassage ist, desto geringer ist i.a. die Ausströmgeschwindigkeit des Synthesegases.

Der Druckverlust über eine Brennstoffpassage ist annähernd proportional zum durch die Passage strömenden Gasmassenstrom, wobei der Strömungswiderstand der Passage die Proportionalitätskonstante bildet. Dies hat zur Folge, dass der Druckverlust bei einem geringen Gasmassenstrom gering ist, bei einem großen Gasmassenstrom dagegen hoch. Wenn nun eine Gasturbinenanlage mit geringer Last gefahren werden soll, so erfordert dies ein Zuführen eines geringen Brennstoffmassenstroms, was gegenüber dem bei Volllast auftretenden Brennstoffmassenstrom zu einem geringen Druckverlust über die Brennstoffpassage führt. Da das Aufrechterhalten einer stabilen Flamme eine gewisse Mindestausströmgeschwindigkeit des Synthesegases erfordert, muss die Brennstoffpassage derart ausgestaltet sein, dass diese Ausströmgeschwindigkeit auch bei nur geringem Brennstoffmassenstrom nicht unterschritten wird, d.h. dass die Brennstoffpassage bei geringen Gasmassenstrom einen bestimmten Mindestdruckverlust aufweist. Dies führt jedoch dazu, dass der Druckverlust bei einem hohen Brennstoffmassenstrom höher ist als nötig, was zu einer Verschlechterung des Wirkungsgrades der Gasturbine führt.

Der erläuterte Zwiespalt zwischen einem nicht zu unterschreitenden Mindestdruckverlust bei geringem Brennstoffmassenstrom und geringem Druckverlust bei hohem Brennstoffmassenstrom tritt beispielsweise beim Anfahren der Gasturbinenanlage auf.

Das erfindungsgemäße Verfahren macht sich beim Anfahren der Gasturbinenanlage zur Nutze, dass das Vorhandensein von zwei Brennstoffpassagen einen weiteren Parameter bietet, mit dem das Anfahren der Gasturbinenanlage optimiert werden kann. Dieser Parameter ist die geeignete Aufteilung des Brennstoffmassenstroms in zwei Teilströme, welche durch die separaten Brennstoffpassagen, über die in der Regel unterschiedliche Druckverluste auftreten, zugeführt werden.

In einer Ausgestaltung des Verfahrens wird in der Startphase nur die zweite, innenliegende Brennstoffpassage mit Synthesegas beladen. Die innenliegende Brennstoffpassage dient in der Regel als Brennstoffpassage eines Pilotbrenners und ist gegenüber der ersten Brennstoffpassage, auch Hauptbrennstoffpassage genannt, für geringere Brennstoffmassenströme ausgelegt. Insbesondere hat sie im Vergleich mit der Hauptbrennstoffpassage üblicherweise einen größeren Strömungswiderstand, sodass auch bei geringen Brennstoffmassenströmen ein ausreichender Druckverlust und damit eine ausreichende Austrittsgeschwindigkeit des Brennstoffes gewährleistet werden kann. Der alleinige Betrieb der zweiten Brennstoffpassage ermöglicht daher einen auf das Zuführen relativ geringer Brennstoffmassenströme optimierten Start der Anlage. In der anschließenden Anfahrphase, in der die erste Brennstoffpassage beladen wird, kann das Beladen der zweiten Brennstoffpassage beibehalten werden. Alternativ ist es jedoch auch möglich, in der Anfahrphase nicht mehr mit dem Beladen der zweiten Brennstoffpassage fortzufahren. Das Zuschalten der ersten Brennstoffpassage in der Anfahrphase erfolgt dann, wenn die Gasturbinenleistung einen Wert erreicht hat, der das Aufrechterhalten einer stabilen Flamme auch bei Zufuhr des Brennstoffes durch die erste Brennstoffpassage ermöglicht. Diese Leistung hängt unter anderem vom Strömungswiderstand der ersten Brennstoffpassage ab. Je geringer dieser Strömungswiderstand ist, desto größer muss der Brennstoffmassenstrom sein, der in der Anfahrphase durch die erste Brennstoffpassage zugeführt wird.

In einer Ausgestaltung des erfindungsgemäßen Verfahrens wird in der Startphase der zweiten Brennstoffpassage ein kontinuierlich ansteigender Brennstoffmassenstrom zugeführt, bis die maximal über die zweite Brennstoffpassage erzielbare Brennerleistung erreicht ist.

Um bei einer gegebenen Leistung der Gasturbinenanlage den zuzuführenden Brennstoffmassenstrom erhöhen zu können, ohne die Leistung zu erhöhen, kann dem Synthesegas ein Inertmedium zugeführt werden. Dieses erhöht zwar den Brennstoffmassenstrom, nimmt jedoch an der Verbrennung nicht Teil, sodass der Brennstoffmassenstrom bei gleicher Leistung höher ist als ohne Inertmedium. Das Inertmedium kann dem durch die erste Brennstoffpassage zugeführten und/oder dem durch die zweite Brennstoffpassage zugeführten Synthesegas beigemischt werden. Insbesondere kann beim Zuschalten der ersten Brennstoffpassage in der Anfahrphase dem durch die erste Brennstoffpassage zugeführten Synthesegas zunächst eine hohe Menge an Inertmedium beigemischt werden, sodass ein Leistungssprung beim Übergang von der Startphase in die Anfahrphase vermieden wird. Würde das Inertmedium nicht zugefügt werden, so würde der zum Aufrechterhalten einer stabilen Flamme durch die erste Brennstoffpassage mindestens zuzuführenden Synthesegasmassenstrom die Leistung der Gasturbine sprunghaft erhöhen.

Im weiteren Verlauf der Startphase und/oder im weiteren Verlauf der Anfahrphase wird der Anteil an Inertmedium im Synthesegas kontinuierlich erniedrigt, um den gewünschten Heizwert des Synthesegases und damit die gewünschte Leistung der Gasturbinenanlage einzustellen.

Nach dem erfindungsgemäßen Verfahren wird zum Starten des Brenners zu Beginn der Startphase ein kleiner Synthesegasmassenstrom über einen Zünd-Pilotbrenner zugeführt und zum Ausbilden einer Zünd-Pilotflamme gezündet. Nach dem Zünden wird dann die zweite Brennstoffpassage zugeschaltet, wobei das aus der zweiten Brennstoffpassage ausströmende Synthesegas über die Zünd-Pilotflamme gezündet wird, um eine Pilotflamme auszubilden. Der Zünd-Pilotbrenner ist stromauf zu in der zweiten Brennstoffpassage vorhandenen Drallerzeugern angeordnet.

Das Zuführen von Synthesegas durch die zweite Brennstoffpassage kann dann derart erfolgen, dass die Pilotflamme aus dem Bereich der Drallerzeuger herausgetragen wird. Das Heraustragen kann etwa dadurch bewerkstelligt werden, dass jegliche Störkanten, an denen Wirbelstraßen entstehen können, vermieden werden. Eine Wirbelstraße besteht aus zwei parallel verlaufenden Wirbelketten, wobei sich die Wirbel der beiden Wirbelketten in entgegengesetztem Uhrzeigersinn drehen. Eine derartige Wirbelstraße kann dazu führen, dass die Flamme im Bereich der Wirbel festgehalten wird. Dies wirkt einem Heraustragen der Flamme aus dem Bereich der Drallerzeuger entgegen. Die Störkanten können durch einen geeigneten Aufbau der zweiten Brennstoffpassage vermieden werden, beispielsweise indem elektrische Zünder oder Pilotgasröhrchen zum Zuführen des Zünd-Pilotgases nicht in die zweite Brennstoffpassage hineinreichen oder in ihr verlaufen. Außerdem können Wirbelstraßen dadurch vermieden werden, dass keine Düsenringe zum Ausdüsen von Synthesegas stromauf möglicher Störkanten angeordnet sind.

Eine weitere Möglichkeit, das Heraustragen der Pilotflamme aus dem Bereich der Drallerzeuger zu bewerkstelligen, besteht darin, den Heizwert des durch die zweite Brennstoffpassage zugeführten Synthesegases derart zu vermindern, dass sich eine Strömungsgeschwindigkeit des Synthesegases einstellen lässt, die wesentlich höher als die Flammengeschwindigkeit ist. Zum Vermindern des Heizwertes kann dem Synthesegas Inertmedium zugeführt werden.

Alternativ kann das Zünden der Pilotflamme mittels der Zünd-Pilotflamme auch stromab des Brenners in der Brennkammer erfolgen. Um das Zünden der Pilotflamme in der Brennkammer mit dem stromauf zu den Drallerzeugern in der zweiten Brennstoffpassage gelegenen Zünd-Pilotbrenner zu ermöglichen, wird dafür gesorgt, dass sich die über den Zünd-Pilotbrenner und über die zweite Brennstoffpassage zugeführten Brennstoffmassenströme nicht vor Erreichen der Brennkammer mischen. Mit anderen Worten, die beiden Brennstoffmassenströme werden getrennt in die Brennkammer eingeführt, bspw. indem die zweite Brennstoffpassage im Bereich der Zünd-Pilotflamme keine Austrittsdüsen für den Austritt von Brennstoff aufweist. Nach erfolgter Zündung der Pilotflamme wird die Zünd-Pilotflamme vorzugsweise abgeschaltet. Mit der beschriebenen Alternative lässt sich erreichen, dass die Pilotflamme gar nicht erst im Brenner selbst brennt und daher auch nicht aus dem Brenner, insbesondere aus dem Bereich der Drallerzeuger, herausgetragen werden muss.

Eine erfindungsgemäße Brenneranordnung für eine Brennkammer, insbesondere für eine Gasturbinenbrennkammer, umfasst:
Einen eine erste Brennstoffpassage zum Zuführen eines ersten Brennstoffmassenstroms umfassenden Hauptbrenner, einen eine zweite Brennstoffpassage zum Zuführen eines zweiten Brennstoffmassenstroms umfassenden Pilotbrenner, wobei im Bereich der zweiten Brennstoffpassage wenigstens ein Drallerzeuger angeordnet ist, und einen stromauf zum Drallerzeuger angeordneten Zünd-Pilotbrenner zum Zünden des Pilotbrenners. Erfindungsgemäß ist die zweite Brennstoffpassage derart ausgestaltet, dass jegliche Störkanten, an denen Wirbelstraßen entstehen können, zwischen dem Zünd-Pilotbrenner und dem Pilotbrenner vermieden sind.

Die erfindungsgemäße Brenneranordnung eignet sich insbesondere zum Durchführen des erfindungsgemäßen Verfahrens in der Variante, in der der Pilotbrenner mittels einer stromauf zu den Drallerzeugern angeordneten Zünd-Pilotflamme gezündet wird. Wenn in der Startphase das Synthesegas durch die zweite Brennstoffpassage zum Pilotbrenner zugeführt wird, ermöglicht die erfindungsgemäße Ausgestaltung des Brennersystems das Heraustragen der Pilotflamme aus dem Bereich der Drallerzeuger.

Das Vermeiden von Störkanten kann beispielsweise dadurch erfolgen, dass keine Brennstoffdüsen stromauf zu möglichen Störkanten angeordnet werden.

In einer vorteilhaften Weiterbildung der erfindungsgemäßen Brenneranordnung weist die zweite Brennstoffpassage in dem Bereich, in dem der der Zünd-Pilotbrenner angeordnet ist, keine Brennstoffauslässe auf. Wenn die zweite Brennstoffpassage bspw. mit einem oder mehreren Düsenringen mit über den Umfang eines Düsenringes verteilten Brennstoffdüsen ausgestattet ist, können insbesondere in demjenigen Umfangsabschnitt, der zum Zünd-Pilotbrenner zeigt, die Brennstoffdüsen weggelassen sein. Dadurch lässt sich einerseits vermeiden, dass der Zünd-Pilotbrenner selbst zu einem eine Wirbelstraße verursachenden Störelement wird, und andererseits ermöglicht das Fehlen von Brennstoffauslässen der zweiten Brennstoffpassage im Bereich des Zünd-Pilotbrenners das getrennte Einleiten der über den Zünd-Pilotbrenner und die zweite Brennstoffpassage zugeführten Synthesegasmassenströme in die Brennkammer.

Weitere Ausgestaltungen der vorliegenden Erfindung ergeben sich aus der nachfolgenden Beschreibung von Ausführungsbeispielen unter Bezugnahme auf die beiliegenden Figuren.
- Fig. 1: zeigt eine erfindungsgemäße Brenneranordnung in einer schematischen Schnittansicht.
- Fig. 2: zeigt einen Ausschnitt des Brenners entlang der Linie A-A aus Fig. 1 in einer schematisierten Darstellung.
- Fig. 3: zeigt in einem Diagramm ein Beispiel für einen erfindungsgemäßen Start- und Anfahrvorgang einer Gasturbine, welche einen Brenner mit zwei Brennstoffpassagen umfasst.

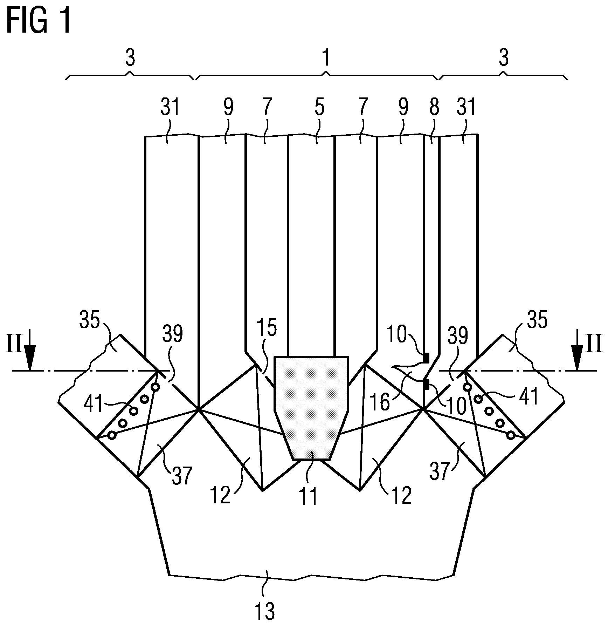

Eine erfindungsgemäße Brenneranordnung ist in Figur 1 in einer schematisierten Schnittdarstellung gezeigt. Die erfindungsgemäße Brenneranordnung umfasst ein zentrales Brennersystem 1, welches als Pilotbrennersystem für die Brenneranordnung dient, sowie ein konzentrisch um das zentrale Brennersystem 1 herum angeordnetes Hautbrennersystem 3. Wenigstens das Hauptbrennersystem 3 ist als Hybridbrennersystem ausgebildet, d.h. es kann sowohl im Diffusions- als auch im Vormischmodus betrieben werden. Das Pilotbrennersystem 1 ist zumindest im Diffusionsmodus betreibbar. Während im Diffusionsmodus der Brennstoff unmittelbar in die Flamme eingedüst wird, erfolgt im Vormischmodus zuerst ein Vormischen des Brennstoffes mit Luft, bevor das Gemisch der Flamme zugeführt wird. Der Betrieb im Vormischmodus wirkt sich insbesondere günstig auf den Schadstoffausstoß einer Gasturbinenanlage aus.

Das zentrale Brennersystem 1 umfasst einen zentralen Zufuhrkanal 5 für flüssige Brennstoffe, eine zentrale Gaszufuhrpassage 7 zur Zufuhr gasförmiger Brennstoffe, im vorliegenden Ausführungsbeispiel zur Zufuhr von Synthesegas, sowie einen zentralen Luftzufuhrkanal 9 zum Zuführen von Luft. Die zentrale Gaszufuhrpassage 7 ist konzentrisch um den in eine Düse 11 zum Eindüsen des flüssigen Brennstoffes in die Brennkammer 13 mündenden zentralen Zufuhrkanal 5 für flüssige Brennstoffe herum angeordnet. Der zentrale Luftzufuhrkanal 9 ist wiederum konzentrisch um die zentrale Gaszufuhrpassage 7 herum angeordnet.

Über Austrittsdüsen 15 mündet die zentrale Gaszufuhrpassage 7 in den zentralen Luftzufuhrkanal 9. Im Mündungsbereich sind Drallerzeuger 12 angeordnet, die falls die Brenneranordnung im Vormischbetrieb betrieben werden soll, für eine Vermischung des Synthesegases mit durch den zentralen Luftzufuhrkanal 9 einströmender Luft sorgen.

Das zentrale Brennersystem 1 umfasst weiterhin einen Zünd-Pilotbrenner, welcher eine rohrförmige Synthesegaszufuhr 8 umfasst, welche stromauf zu den Drallerzeugern 12 in den zentralen Luftzufuhrkanal 9 mündet. Die rohrförmige Synthesegaszufuhr 8 ist dabei zur Zufuhr eines kleinen und möglichst unverdünnten Synthesegasmassenstromes ausgestaltet. Im Bereich der Mündung ist außerdem ein elektrischer Zünder 10 vorhanden, mit dem das aus der Mündung ausströmende Gas gezündet werden kann.

Das zentrale Brennersystem 1 fungiert als Pilotbrennersystem und dient der Aufrechterhaltung einer die Stabilität der Brennerflamme unterstützenden Pilotflamme. Es erlaubt prinzipiell den Betrieb des Brenners als Diffusionsbrenner. Das Zünden des Pilotbrenners erfolgt mittels des Zünd-Pilotbrennersystems, welches gelegentlich auch sekundäres Pilotbrennersystem genannt wird.

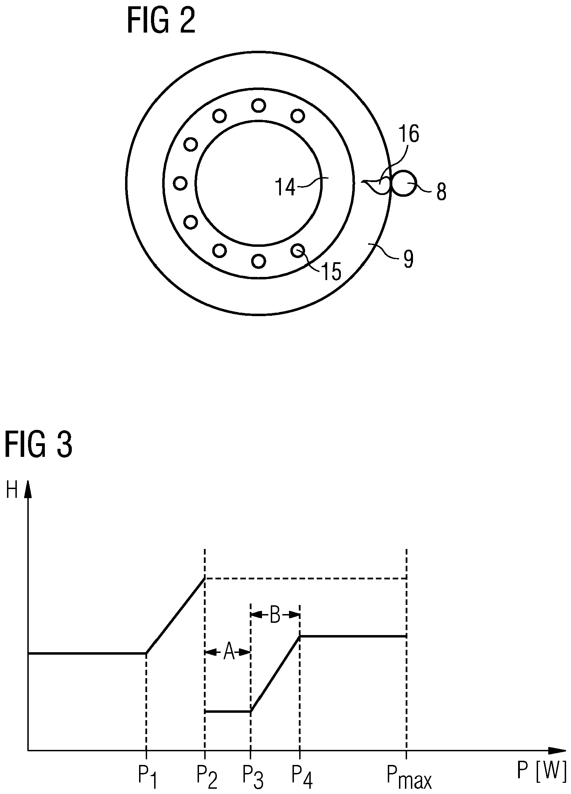

Die düsenförmigen Austrittsöffnungen 15, die rohrförmige Synthesegaszufuhr 8 und der zentrale Luftzufuhrkanal 9 sind in Figur 2 in einem Schnitt entlang der Linie II-II aus Figur 1 schematisch dargestellt. Die düsenförmigen Austrittsöffnungen 15 bilden einen Düsenring 14, welcher die zentrale Gaszufuhrpassage 7 abschließt. Die Düsen 15 sind über den Umfang des Düsenrings mit gleichmäßigen Abständen voneinander verteilt. Lediglich in dem Bereich, welcher der Mündung der rohrförmigen Synthesegaszufuhr 8 in den Luftzufuhrkanal 9 gegenüber liegt, sind im Düsenring 14 keine Düsen 15 vorhanden. Das Weglassen der Düsen 15 in diesem Bereich dient dazu, Störungen in der im Luftzufuhrkanal 9 vorhandenen Strömung zu vermeiden, welche zu Wirbelstraßen führen könnten, die als unerwünschte Flammerhalter wirken würden. Außerdem kann durch das Weglassen der Düsen erreicht werden, dass sich das über die zentrale Brennstoffpassage 7 zugeführte Synthesegas erst in der Brennkammer 13 und nicht bereits im Brenner entzündet.

In Figur 1 ist die Synthesegaszufuhr 8 an der Außenseite des zentralen Luftzufuhrkanals 9 angeordnet. Alternativ ist es jedoch auch möglich, die rohrförmige Synthesegaszufuhr 8 durch die zentrale Gaszufuhrpassage 7 zu führen.

Das konzentrisch um das zentrale Brennersystem 1 herum angeordnete Hauptbrennersystem umfasst eine Gaszufuhrpassage 31, welche das zentrale Brennersystem 1 ringförmig umgibt, sowie einen Luftzufuhrkanal 35. Im Luftzufuhrkanal 35 sind Drallerzeuger 37 angeordnet, welche der in Richtung auf die Brennkammer 13 strömenden Luft einen Drall zuführen. Der Bereich des Zufuhrkanals 35, in dem die Drallerzeuger 37 angeordnet sind, bildet eine Mischpassage zum Mischen des Synthesegases mit der einströmenden Luft. Zur Zufuhr des Synthesegases sind die Drallerzeuger 37 wenigstens teilweise hohl ausgebildet. Diese Hohlräume stehen über Öffnungen 39 mit der äußeren Gaszufuhrpassage 31 in Verbindung. An geeigneten Stellen weisen die Drallerzeuger 37 Auslassdüsen 41 auf, durch welche das durch die äußere Gaszufuhrpassage 31 zugeführte Synthesegas in den durch den Luftzufuhrkanal 35 zugeführten Luftstrom eintreten kann. Die Auslassdüsen 41 sind derart in den Drallerzeugern angeordnet, dass das Synthesegas zusammen mit der Luft noch mindestens einen Abschnitt der Drallerzeuger 37 passiert, um eine gute Vermischung mit der Luft im Vormischbetrieb zu erreichen.

Ein Synthesegasstart, d.h. ein Start des Brenners mittels Synthesegas, wird nachfolgend unter Bezugnahme auf Figur 3 beschrieben, in welcher der Heizwert des verwendeten Synthesegases gegen die Gasturbinenleistung P aufgetragen ist.

Beim Synthesgasstart wird über das zentrale Brennersystem 1 niederkalorisches Synthesegas in die Verbrennungszone geführt und dort entweder über eine Zünd-Pilotflamme oder einen elektrischen Zünder gezündet. Das zentrale Brennersystem 1 ist dabei als Diffusionsbrenner ausgeführt und weist einen kleinen Effektivquerschnitt auf, um einen ausreichend hohen Strömungswiderstand und somit eine hohe Austrittsgeschwindigkeit bei kleinem Synthesegasmassenstrom zu gewährleisten. Nachdem sich eine stabile Flamme am Austrittsende des zentralen Brennersystems 1 gebildet hat, wird die Gasturbine durch Erhöhen des Synthesegasmassenstroms über die zentrale Gaszufuhrpassage 7 weiter belasten, synchronisiert und die Gasturbinenleistung solange erhöht, bis der Druckverlust über die zentrale Brennstoffpassage 7 den maximal möglichen Wert erreicht hat.

Nach Erreichen des maximal möglichen Wertes wird das Hauptbrennersystem 3 geregelt zugeschaltet, welches sowohl als Diffusions- als auch als Vormischbrenner ausgeführt sein kann. Wenn das Hauptbrennersystem in Betrieb ist, kann das zentrale Brennersystem 1 grundsätzlich abgeschaltet werden. Alternativ ist es auch möglich, beide Brennersysteme simultan weiterzubetreiben.

Der Start der Gasturbine mit Synthesegas erfolgt dann besonders vorteilhaft, wenn zum Zünden des zentralen Brennersystems 1 ein die Synthesegaszufuhr 8 umfassender Zünd-Pilotbrenner, wie er in Figur 1 und Figur 2 dargestellt ist, Verwendung findet. Über die Synthesegaszufuhr 8 wird ein kleiner und möglichst unverdünnter Synthesegasstrom in den Luftzufuhrkanal 9 eingedüst und das eingedüste Synthesegas über den elektrischen Zünder 10 gezündet. Im nächsten Schritt wird mittels der stromauf zum Drallerzeuger 12 brennenden Zünd-Pilotflamme 16 die als Diffusionsflamme ausgebildete Synthesegasflamme der Gaszufuhrpassage 7 gezündet und aus dem Bereich des Drallerzeugers herausgetragen.

Das Heraustragen der Flamme kann dadurch erreicht werden, dass Störkanten, an denen Wirbelstraßen entstehen können, die als unerwünschte Flammenhalter wirken, im Bereich zwischen der Austrittsöffnung 10 und der Brennkammer 13 vermieden sind. In der in Figur 1 dargestellten Brenneranordnung sind Störkanten dadurch vermieden, dass die rohrförmige Synthesegaszufuhr 8 und der elektrische Zünder 10 nicht im Luftzufuhrkanal 9 angeordnet sind. Außerdem sind keine Düsenringe stromauf möglicher Störkanten angeordnet. Wenn die Flamme aus den Drallerzeugern 12 des zentralen Luftzufuhrkanals 9 herausgetragen ist, und durch Zufuhr von Synthesegas durch die zentrale Brennstoffpassage 7 aufrechterhalten werden kann, kann die Zünd-Pilotflamme 16 abgeschaltet werden.

Eine alternative Möglichkeit, die Verbrennung im Drallerzeuger 12 des zentralen Luftzufuhrkanals 9 zu vermeiden, besteht darin, den Heizwert des durch die zentrale Brennstoffpassage 7 zugeführten Synthesegases durch Verdünnen mit einem Inertmedium, beispielsweise Stickstoff, Kohlendioxid oder Wasserdampf, soweit zu verdünnen, dass mit einem hohen Massenstrom gearbeitet werden kann. Das Verdünnungsverhältnis ist derart gewählt, dass durch die zentrale Brennstoffpassage 7 ein Massenstrom zugeführt werden kann, der zu einer Strömungsgeschwindigkeit des verdünnten Synthesegases im Bereich der Drallerzeuger 12 führt, die wesentlich höher ist, als die Flammengeschwindigkeit. Auf diese Weise wird die Flamme aus den Drallerzeugern 12 herausgetragen.

Die Verringerung des Heizwertes des Synthesegases führt bei konstanter Gasturbinenleistung zu einer Erhöhung des Massenstroms und damit zu einer Erhöhung des Druckverlustes über die zentrale Brennstoffpassage 7. Dies führt auch zu einer geringeren maximalen Feuerleistung über diese Brennstoffpassage. Daher ist eine Kombination aus Zündung mittels des Zünd-Pilotbrenners und einer moderaten Verdünnung zur Verringerung des Heizwertes besonders günstig.

Wenn, wie in Fig. 1 und Fig. 2 dargestellt, der Düsenring 14 der zentralen Brennstoffpassage 7 in seinem dem Zünd-Pilotbrenner 8 gegenüberliegenden Abschnitt keine Düsen 15 aufweist, lässt sich auch erreichen, dass sich das über den Zünd-Pilotbrenner 8 und die zentrale Brennstoffpassage 7 zugeführte Synthesegas erst in der Brennkammer 13 mischen. In diesem Fall zündet die von der Synthesegaszufuhr des Zünd-Pilotbrenners 8 gespeiste Zünd-Pilotflamme 16 das über die zweite Brennstoffpassage 7 zugeführte Synthesegas erst in der Brennkammer 13, so dass kein Heraustragen der Flamme des über die zweite Brennstoffpassage 7 zugeführten Synthesegases aus dem Drallerzeuger 12 zu erfolgen braucht.

Nach dem Synchronisieren der Gasturbine und dem Erreichen der maximalen Leistung P₁ mittels des verdünnten Synthesegases über die zentrale Brennstoffpassage 7 kann die Leistung der Gasturbine dadurch weiter erhöht werden, dass die Verdünnung des durch die zentrale Brennstoffpassage 7 zugeführten Synthesegases verringert wird. Mit anderen Worten, das zugeführte Inertmedium wird nach und nach durch Synthesegas ersetzt. Dies ist deshalb möglich, weil im Falle der Leistung P₁ der Massenstrom eines unverdünnten Synthesegases bereits groß genug ist, um zu einer Austrittsgeschwindigkeit zu führen, die ein Zurückziehen der Flamme in den Drallerzeuger 12 verhindert.

Nachdem die über die zentrale Brennstoffpassage 7 maximal erzielbare Brennerleistung P₂ erreicht ist, d.h. nachdem ein maximal möglicher unverdünnter Synthesegasmassenstrom zugeführt wird, muss die Hauptpassage 3 zugeschaltet werden, um die Gasturbinenleistung weiter zu erhöhen. Auch bei der Hauptbrennstoffpassage 31 ist eine Mindestaustrittsgeschwindigkeit des Synthesegases, d.h. ein Mindestdruckverlust über die Hauptbrennstoffpassage 31 sicherzustellen, um akustische Instabilitäten oder Brennerüberhitzungen zu vermeiden. Dieser Mindestdruckverlust entspricht aufgrund der Größe der Passage ca. 50% der Gasturbinenleistung. Da die maximal mögliche Leistung, welche über die zentrale Brennstoffpassage 7 möglich ist, weit geringer sein kann (ca. 10% bis 20%), würde ein Zuschalten der Hauptbrennstoffpassage 31 zu einem Leistungssprung führen, der sich dadurch vermeiden lässt, dass dem durch die Hauptbrennstoffpassage 31 zugeführten Synthesegas in einem ersten Schritt der Anfahrphase ein hoher Anteil an Inertmedium zugeführt wird, um den Heizwert des Synthesegases zu verringern. Dadurch wird ein hoher Volumenstrom bei gleichzeitig geringem Brennstoffenergiegehalt möglich, der die Gasturbinenleistung verringert. Die Zufuhr der Hauptbrennstoffpassage 31 erfolgt geregelt bei gleichzeitig geregelter Anpassung des über die zentrale Brennstoffpassage 7 zugeführten Synthesegasmassenstroms.

In der Anfahrphase wird zuerst der Synthesegasmassenstrom bei konstantem Heizwert H des Synthesegases bis zur gewünschten Leistung P₃ erhöht (Abschnitt A in Fig.3). Danach wird der hohe Anteil an Inertmedium Schritt für Schritt unter Beachtung der zulässigen Gradienten geregelt durch Synthesegas ersetzt und so der gewünschte Heizwert eingestellt (B in Fig. 3), bis eine vorgegebene Leistung P₄ erreicht ist. Nachfolgend kann dann eine Leistungserhöhung durch Erhöhen des durch die Hauptbrennstoffpassage 31 zugeführten Synthesegasmassenstroms bis auf die maximale Leistung Pₘₐₓ erfolgen.

In einer alternativen Ausgestaltung der Anfahrphase kann das Zuschalten der Hauptbrennstoffpassage 31 auch ohne Inertmedium erfolgen. Es werden dann nicht alle Brenner der Gasturbine gleichzeitig zugeschaltet, sondern nur Brennergruppen, die separat angesteuert werden können. Durch die Zuschaltung von Brennergruppen verteilt sich der Synthesegasmassenstrom auf weniger Brenner und führt somit zu einem höheren Druckverlust pro Brenner. Nach und nach können dann solange weitere Brennergruppen zugeschaltet werden, bis alle Brenner zugeschaltet sind.

## Patentansprüche

1. Verfahren zum Anfahren eines Brenners,
wobei der Brenner zum Verbrennen eines Synthesegases ausgelegt ist und eine erste und eine zweite Brennstoffpassage (7, 31) aufweist,
wobei die erste Brennstoffpassage (31) die zweite Brennstoffpassage (7) im Wesentlichen konzentrisch umgibt und wobei dem Brenner Synthesegas zugeführt wird und das Synthesegas mit Verbrennungsluft gemischt und verbrannt wird, wobei zum Anfahren des Brenners zunächst in einer Startphase die zweite Brennstoffpassage (7) mit Synthesegas bis zu einer vorgegebenen Brennerleistung beladen wird und danach in einer sich an die Startphase anschließenden Anfahrphase die erste Brennstoffpassage (31) mit Synthesegas beladen wird,
**dadurch gekennzeichnet, dass** zum Starten des Brenners ein kleiner Synthesegasmassenstrom über einen Zünd-Pilotbrenner (8, 10) zugeführt und zum Ausbilden einer Zünd-Pilotflamme (16) gezündet wird und nach dem Zünden der Zünd-Pilotflamme (16) die zweite Brennstoffpassage (7) zugeschaltet wird, wobei das aus der zweiten Brennstoffpassage (7) ausströmende Synthesegas über die Zünd-Pilotflamme (16) zu einer Pilotflamme gezündet wird,
wobei der Zünd-Pilotbrenner (8,10) stromauf zu in der zweiten Brennstoffpassage (7) vorhandenen Drallerzeugern (12) angeordnet ist, und dass das Zünden der Pilotflamme mittels der Zünd-Pilotflamme erst in der Brennkammer (13) erfolgt.

2. Verfahren nach Anspruch 1,
**dadurch gekennzeichnet, dass**
das Zünden der Pilotflamme in der Brennkammer (13) dadurch erreichet wird, dass das über den Zünd-Pilotbrenner (8, 10) und über die zweite Brennstoffpassage (7) zugeführte Synthesegas derart zugeführt wird, dass sich das über den Zünd-Pilotbrenner (8, 10) zugeführte Synthesegas und das über die zweite Brennstoffpassage (7) zugeführte Synthesegas erst in der Brennkammer (13) mischen.

3. Verfahren zum Anfahren eines Brenners,
wobei der Brenner zum Verbrennen eines Synthesegases ausgelegt ist und eine erste und eine zweite Brennstoffpassage (7, 31) aufweist,
wobei die erste Brennstoffpassage (31) die zweite Brennstoffpassage (7) im Wesentlichen konzentrisch umgibt und wobei dem Brenner Synthesegas zugeführt wird und das Synthesegas mit Verbrennungsluft gemischt und verbrannt wird, wobei
zum Anfahren des Brenners zunächst in einer Startphase die zweite Brennstoffpassage (7) mit Synthesegas bis zu einer vorgegebenen Brennerleistung beladen wird und danach in einer sich an die Startphase anschließenden Anfahrphase die erste Brennstoffpassage(31) mit Synthesegas beladen wird,
**dadurch gekennzeichnet, dass** zum Starten des Brenners ein kleiner Synthesegasmassenstrom über einen Zünd-Pilotbrenner (8, 10) zugeführt und zum Ausbilden einer Zünd-Pilotflamme (16) gezündet wird und nach dem Zünden der Zünd-Pilotflamme (16) die zweite Brennstoffpassage (7) zugeschaltet wird, wobei das aus der zweiten Brennstoffpassage (7) ausströmende Synthesegas über die Zünd-Pilotflamme (16) zu einer Pilotflamme gezündet wird,
wobei der Zünd-Pilotbrenner (8,10) stromauf zu in der zweiten Brennstoffpassage (7) vorhandenen Drallerzeugern (12) angeordnet ist, und dass das Zuführen von Synthesegas durch die zweite Brennstoffpassage (7) derart erfolgt, dass die Pilotflamme aus dem Bereich der Drallerzeuger (12) herausgetragen wird.

4. Verfahren nach Anspruch 3,
**dadurch gekennzeichnet, dass**
das Heraustragen dadurch bewerkstelligt wird, dass jegliche Störkanten, an denen Wirbelstraßen entstehen können, vermieden werden.

5. Verfahren nach Anspruch 3,
**dadurch gekennzeichnet, dass**
das Heraustragen dadurch bewerkstelligt wird, dass der Heizwert des durch die zweite Brennstoffpassage (7) zugeführten Synthesegas derart vermindert wird, dass sich eine Strömungsgeschwindigkeit des Synthesegas einstellen lässt, die wesentlich höher als die Flammgeschwindigkeit ist.

6. Verfahren nach Anspruch 5,
**dadurch gekennzeichnet, dass**
das Vermindern des Heizwertes durch Verdünnen des Synthesegases mit einem Inertmedium erfolgt.

7. Verfahren nach einem der Ansprüche 1 bis 6,
**dadurch gekennzeichnet, dass**
in der Startphase nur die zweite Brennstoffpassage (7) mit Synthesegas beladen wird.

8. Verfahren nach Anspruch 1 bis 7,
**dadurch gekennzeichnet, dass**
in der Anfahrphase die zweite Brennstoffpassage (7) mit Synthesegas beladen wird.

9. Verfahren nach Anspruch 1 bis 8,
**dadurch gekennzeichnet, dass**
in der Anfahrphase nur die erste Brennstoffpassage (31) mit Synthesegas beladen wird.

10. Verfahren nach einem der Ansprüche 1 bis 9,
**dadurch gekennzeichnet, dass**
in der Startphase der zweiten Brennstoffpassage (7) ein kontinuierlich ansteigender Massenstrom an Synthesegas bis zu einer maximal über die zweite Brennstoffpassage (7) erzielbare Brennerleistung zugeführt wird.

11. Verfahren nach einem der Ansprüche 1 bis 10,
**dadurch gekennzeichnet, dass**
dem Synthesegas ein Inertmedium gezielt beigemischt wird, so dass ein gewünschter Heizwert eingestellt wird.

12. Verfahren nach Anspruch 11,
**dadurch gekennzeichnet, dass**
beim Zuschalten der ersten Brennstoffpassage (31) in der Anfahrphase zunächst eine hohe Menge an Inertmedium dem in der ersten Brennstoffpassage (31) zugeführten Synthesegas beigemischt wird, so dass ein Leitungssprung beim Übergang von der Startphase in die Anfahrphase vermieden wird.

13. Verfahren nach Anspruch 11,
**dadurch gekennzeichnet, dass**
der Anteil an Inertmedium im Synthesegas kontinuierlich verringert wird, bis der gewünschte Heizwert eingestellt ist.

14. Brenneranordnung für eine Brennkammer (13), insbesondere eine Gasturbinenbrennkammer, mit
- einem eine erste Brennstoffpassage (31) zum Zuführen eines ersten Brennstoffmassenstroms umfassenden Hauptbrenner (3),
- einem eine zweite Brennstoffpassage (7) zum Zuführen eines zweiten Brennstoffmassenstroms umfassenden Pilotbrenner (1), wobei im Bereich der zweiten Brennstoffpassage (7) wenigstens ein Drallerzeuger (12) angeordnet ist, und
- einem stromauf zum Drallerzeuger (12) angeordneten Zünd-Pilotbrenner (8, 10) zum Zünden des Pilotbrenners (1), **dadurch gekennzeichnet, dass**
die zweite Brennstoffpassage (7) derart ausgestaltet ist, dass jegliche Störkanten, an denen Wirbelstraßen entstehen können, zwischen dem Zünd-Pilotbrenner (8, 10) und der Brennkammer (13) vermieden sind.

15. Brenneranordnung nach Anspruch 14,
**dadurch gekennzeichnet, dass**
keine Brennstoffdüsen stromauf zu möglichen Störkanten angeordnet sind.

16. Brenneranordnung nach Anspruch 14 oder 15,
**dadurch gekennzeichnet, dass**
die zweite Brennstoffpassage (7) in dem Bereich, in dem der der Zünd-Pilotbrenner (8,10) angeordnet ist, keine Brennstoffauslässe (15) aufweist.

17. Brenneranordnung nach Anspruch 16,
**dadurch gekennzeichnet, dass**
die zweite Brennstoffpassage (7) mit wenigstens einem Düsenring (14) mit über seinen Umfang verteilten Brennstoffdüsen (15) als Brennstoffauslässen ausgestattet ist, wobei in demjenigen Umfangsabschnitt des Düsenringes (14), der zum Zünd-Pilotbrenner (8, 10) zeigt, keine Brennstoffdüsen vorhanden sind.

## Claims

1. Method for starting a burner,
with the burner being designed to combust a synthesis gas and having a first and second fuel passage (7, 31),
with the first fuel passage (31) encompassing the second fuel passage (7) in an essentially concentric manner and with synthesis gas being supplied to the burner and the synthesis gas being mixed with combustion air and combusted, with the second fuel passage (7) first being charged with synthesis gas to a predetermined burner power to start the burner in an initial phase and the first fuel passage (31) then being charged with synthesis gas in a start phase following on from the initial phase
**characterised in that**
to start the burner, a small synthesis gas mass flow is supplied by way of an ignition pilot burner (8, 10) and ignited to form an ignition pilot flame (16) and after the ignition pilot flame (16) has been ignited, the second fuel passage (7) is connected, with the synthesis gas flowing out of the second fuel passage (7) being ignited to form a pilot flame by way of the ignition pilot flame (16),
with the ignition pilot burner (8, 10) being disposed upstream of swirl generators (12) present in the second fuel passage (7)
and ignition of the pilot flame by means of the ignition pilot flame only taking place in the combustion chamber (13).

2. Method according to claim 1,
**characterised in that**
ignition of the pilot flame in the combustion chamber (13) is achieved by supplying the synthesis gas supplied by way of the ignition pilot burner (8, 10) and over the second fuel passage (7) in such a manner that the synthesis gas supplied by way of the ignition pilot burner (8, 10) and the synthesis gas supplied over the second fuel passage (7) are only mixed in the combustion chamber (13)

3. Method for starting a burner,
with the burner being designed to combust a synthesis gas and having a first and second fuel passage (7, 31),
with the first fuel passage (31) encompassing the second fuel passage (7) in an essentially concentric manner and with synthesis gas being supplied to the burner and the synthesis gas being mixed with combustion air and combusted,
with the second fuel passage (7) first being charged with synthesis gas to a predetermined burner power to start the burner in an initial phase and the first fuel passage (31) then being charged with synthesis gas in a start phase following on from the initial phase
**characterised in that**
to start the burner, a small synthesis gas mass flow is supplied by way of an ignition pilot burner (8, 10) and ignited to form an ignition pilot flame (16) and after the ignition pilot flame (16) has been ignited, the second fuel passage (7) is connected, with the synthesis gas flowing out of the second fuel passage (7) being ignited to form a pilot flame by way of the ignition pilot flame (16),
with the ignition pilot burner (8, 10) being disposed upstream of swirl generators (12) present in the second fuel passage (7) and synthesis gas being supplied through the second fuel passage (7) in such a manner that the pilot flame is removed from the region of the swirl generators (12).

4. Method according to claim 3,
**characterised in that**
removal is effected by preventing any interference edges, at which vortex streets may develop.

5. Method according to claim 3,
**characterised in that**
removal is effected by reducing the calorific value of the synthesis gas supplied through the second fuel passage (7) in such a manner that a flow speed of the synthesis gas is set, which is significantly higher than the flame speed.

6. Method according to claim 5,
**characterised in that**
the calorific value is reduced by diluting the synthesis gas with an inert medium.

7. Method according to one of claims 1 to 6,
**characterised in that**
only the second fuel passage (7) is charged with synthesis gas in the initial phase.

8. Method according to claim 1 to 7,
**characterised in that**
the second fuel passage (7) is charged with synthesis gas in the start phase.

9. Method according to claim 1 to 8,
**characterised in that**
only the first fuel passage (31) is charged with synthesis gas in the start phase.

10. Method according to one of claims 1 to 9,
**characterised in that**
in the initial phase a continuously increasing mass flow of synthesis gas is supplied to the second fuel passage (7) to a maximum burner power that can be achieved over the second fuel passage (7).

11. Method according to one of claims 1 to 10,
**characterised in that**
an inert medium is mixed in with the synthesis gas specifically so that a required calorific value is set.

12. Method according to claim 11,
**characterised in that**
when the first fuel passage (31) is connected in the start phase, a large quantity of inert medium is first mixed in with the synthesis gas supplied in the first fuel passage (31), so that a sudden jump in power is prevented during the transition from initial phase to start phase.

13. Method according to claim 11,
**characterised in that**
the proportion of inert medium in the synthesis gas is reduced continuously, until the required calorific value is set.

14. Burner arrangement for a combustion chamber (13), in particular a gas turbine combustion chamber, with
- a main burner (3) comprising a first fuel passage (31) to supply a first fuel mass flow,
- a pilot burner (1) comprising a second fuel passage (7) to supply a second fuel mass flow, with at least one swirl generator (12) being disposed in the region of the second fuel passage (7), and
- an ignition pilot burner (8, 10) disposed upstream of the swirl generator (12) to ignite the pilot burner (1),
**characterised in that**
the second fuel passage (7) is configured in such a manner that any interference edges, at which vortex streets may develop, are prevented between the ignition pilot burner (8, 10) and the combustion chamber (13).

15. Burner arrangement according to claim 14,
**characterised in that**
no fuel nozzles are disposed upstream of possible interference edges.

16. Burner arrangement according to claim 14 or 15,
**characterised in that**
the second fuel passage (7) has no fuel outlets (15) in the region in which the ignition pilot burner (8, 10) is disposed.

17. Burner arrangement according to claim 16,
**characterised in that**
the second fuel passage (7) is fitted with at least one nozzle ring (14) with fuel nozzles (15) distributed as fuel outlets over its periphery, with no fuel nozzles being present in the peripheral segment of the nozzle ring (14) facing the ignition pilot burner (8, 10).

## Revendications

1. Procédé de mise en fonctionnement d'un brûleur,
le brûleur étant conçu pour la combustion d'un gaz de synthèse et ayant un premier et un deuxième passage (7, 31) pour du combustible,
dans lequel le premier passage (31) pour du combustible entoure sensiblement concentriquement le deuxième passage (7) et dans lequel du gaz de synthèse est apporté au brûleur et le gaz de synthèse est mélangé à de l'air de combustion et brûlé,
dans lequel, pour mettre le brûleur en fonctionnement, on alimente d'abord dans une phase de démarrage, le deuxième passage (16) pour du combustible en gaz de synthèse jusqu'à une puissance du brûleur donnée à l'avance et, ensuite, on alimente le premier passage (31) pour du combustible en gaz de synthèse dans une phase de mise en fonctionnement faisant suite à la phase de démarrage,
**caractérisé en ce que**, pour le démarrage du brûleur, on apporte un courant massique de gaz de synthèse petit par un brûleur (8, 10) pilote d'allumage et on l'allume pour la constitution d'une flamme (16) pilote d'allumage et, après l'allumage de la flamme (16) pilote d'allumage, on branche le deuxième passage (7) pour du combustible, le gaz de synthèse sortant du deuxième passage (7) pour du combustible étant allumé en une flamme pilote par la flamme (16) pilote d'allumage,
dans lequel le brûleur (8, 10) pilote d'allumage est en amont de dispositifs (12) créant des tourbillons présents dans le deuxième passage (7) pour du combustible,
et **en ce que** l'allumage de la flamme pilote s'effectue au moyen de la flamme pilote d'allumage seulement dans la chambre de combustion (13).

2. Procédé suivant la revendication 1,
**caractérisé en ce que**
on obtient l'allumage de la flamme pilote dans la chambre de combustion (13) en apportant le gaz de synthèse apporté par le brûleur (8, 10) pilote d'allumage et par le deuxième passage (7) pour du combustible de manière à ce que le gaz de synthèse apporté par le brûleur (8, 10) pilote d'allumage et le gaz de synthèse apporté par le deuxième passage (7) pour du combustible ne se mélangent que dans la chambre de combustion (13).

3. Procédé de mise d'un brûleur en fonctionnement,
dans lequel le brûleur est conçu pour brûler un gaz de synthèse et a un premier et un deuxième passage (7, 31) pour du combustible,
dans lequel le premier passage (31) pour du combustible entoure sensiblement concentriquement le deuxième passage (7) et dans lequel du gaz de synthèse est apporté au brûleur et le gaz de synthèse est mélangé à de l'air de combustion et brûlé,
dans lequel, pour mettre le brûleur en fonctionnement, on alimente d'abord dans une phase de démarrage, le deuxième passage (16) pour du combustible en gaz de synthèse jusqu'à une puissance du brûleur donnée à l'avance et, ensuite, on alimente le premier passage (31) pour du combustible en gaz de synthèse dans une phase de mise en fonctionnement faisant suite à la phase de démarrage,
**caractérisé en ce que**, pour le démarrage du brûleur, on apporte un courant massique de gaz de synthèse petit par un brûleur (8, 10) pilote d'allumage et on l'allume pour la constitution d'une flamme (16) pilote d'allumage et, après l'allumage de la flamme (16) pilote d'allumage, on branche le deuxième passage (7) pour du combustible, le gaz de synthèse sortant du deuxième passage (7) pour du combustible étant allumé en une flamme pilote par la flamme (16) pilote d'allumage,
dans lequel le brûleur (8, 10) pilote d'allumage est en amont de dispositifs (12) créant des tourbillons présents dans le deuxième passage (7) pour du combustible,
et **en ce que** l'apport de gaz de synthèse par le deuxième passage (7) pour du combustible s'effectue de manière à ce que la flamme pilote soit sortie de la région des dispositifs (12) de production de tourbillons.

4. Procédé suivant la revendication 3,
**caractérisé en ce que**
on provoque la sortie en évitant tout bord perturbateur où peuvent se créer des allées de tourbillons.

5. Procédé suivant la revendication 3,
**caractérisé en ce que**
on provoque la sortie en diminuant le pouvoir calorifique du gaz de synthèse apporté par le deuxième passage (7) pour du combustible de manière à pouvoir établir une vitesse d'écoulement du gaz de synthèse qui est sensiblement plus grande que la vitesse de la flamme.

6. Procédé suivant la revendication 5,
**caractérisé en ce que**
on effectue la diminution du pouvoir calorifique en diluant le gaz de synthèse par un fluide inerte.

7. Procédé suivant les revendications de 1 à 6,
**caractérisé en ce que**
dans la phase de démarrage, on n'alimente en gaz de synthèse que le deuxième passage (7) pour du combustible.

8. Procédé suivant les revendications de 1 à 7,
**caractérisé en ce que**
dans la phase de mise en fonctionnement, on alimente en gaz de synthèse le deuxième passage (7) pour du combustible.

9. Procédé suivant la revendication de 1 à 8,
**caractérisé en ce que**
dans la phase de mise fonctionnement, on n'alimente en gaz de synthèse que le premier passage (31) pour du combustible.

10. Procédé suivant les revendications de 1 à 9,
**caractérisé en ce que**
dans la phase de démarrage, on apporte au deuxième passage (7) pour du combustible un courant massique augmentant continuellement de gaz de synthèse jusqu'à une puissance de brûleur pouvant être atteinte au maximum par le deuxième passage (7) pour du combustible.

11. Procédé suivant l'une des revendications de 1 à 10,
**caractérisé en ce que**
on ajoute, à dessein, un fluide inerte au gaz de synthèse de manière à établir un pouvoir calorifique souhaité.

12. Procédé suivant la revendication 11,
**caractérisé en ce que**
lors du branchement du premier passage (31) pour du combustible dans la phase de mise en fonctionnement, on mélange d'abord une grande quantité de fluide inerte au gaz de synthèse apporté dans le premier passage (31) pour du combustible de manière à empêcher un saut de puissance à la transition de la phase de démarrage à la phase de mise en fonctionnement.

13. Procédé suivant la revendication 11,
**caractérisé en ce que**
on diminue continuellement la proportion de fluide inerte dans le gaz de synthèse jusqu'à établir le pouvoir calorifique souhaité.

14. Agencement de brûleur pour une chambre de combustion (13), notamment pour une chambre de combustion pour une turbine à gaz, comprenant
- un premier brûleur (3) principal comprenant un premier passage (31) pour du combustible pour apporter un premier courant massique de combustible,
- un brûleur (1) pilote comprenant un deuxième passage (7) pour du combustible pour apporter un deuxième courant massique de combustible, dans lequel, dans la zone du deuxième passage (7) pour du combustible, est disposé au moins un dispositif (12) de production de tourbillons, et
- un brûleur (8, 10) pilote d'allumage disposé en amont du dispositif (12) de production de tourbillons pour allumer le brûleur (1) pilote,
**caractérisé en ce que**
le deuxième passage (7) pour du combustible est conformé de manière à empêcher, entre le brûleur (8, 10) pilote d'allumage et la chambre de combustion (13), tout bord perturbateur où pourraient se créer des allées de tourbillons.

15. Agencement de brûleur suivant la revendication 14,
**caractérisé en ce que**
des buses à combustible ne sont pas montées en amont de bords perturbateurs éventuels.

16. Procédé suivant la revendication 14 ou 15,
**caractérisé en ce que**
le deuxième passage (7) pour du combustible n'a pas de sortie (15) pour du combustible dans la zone où est monté le brûleur (8, 10) pilote d'allumage.

17. Procédé suivant la revendication 16,
**caractérisé en ce que**
le deuxième passage (7) pour du combustible est équipé, comme sorties (15) de combustible, d'au moins un anneau (14) de buses ayant des buses (17) à combustible réparties sur son pourtour, des buses à combustible n'étant pas présentes dans le segment de la périphérie de l'anneau (14) de buses qui est tourné vers le brûleur (8, 10) pilote d'allumage.
